# EUROPÄISCHE PATENTSCHRIFT

(11) **EP 0 782 654 B1**
(45) Veröffentlichungstag und Bekanntmachung des Hinweises auf die Patenterteilung: **16.12.1998**
(21) Anmeldenummer: 95931901.3
(22) Anmeldetag: 21.09.1995
(51) Int. Cl.: E04H 1/12

(54) **VERBINDUNGSSYSTEM, INSBESONDERE ZUR ERRICHTUNG VON RAUMZELLEN UND MONTAGEMÖBELN**
CONNECTION SYSTEM, IN PARTICULAR FOR CONSTRUCTING ACCOMMODATION UNITS AND ASSEMBLED FURNITURE
SYSTEME D'ASSEMBLAGE, EN PARTICULIER POUR LA CONSTRUCTION D'UNITES DE RANGEMENT ET DE MEUBLES PRE-ASSEMBLES

(30) Priorität: 23.09.1994 DE 9415786 U; 08.09.1995 DE 29514424 U
(43) Veröffentlichungstag der Anmeldung: 09.07.1997
(73) Patentinhaber: LIGNUM GMBH MESSE- UND LADENBAUSYSTEME, 01277 Dresden (DE)
(72) Erfinder: AURICH, Winfried, D-01099 Dresden (DE)
(74) Vertreter: Heyner, Klaus, Dr.-Ing.
(86) Internationale Anmeldenummer: DE9501304
(87) Internationale Veröffentlichungsnummer: WO9609451

(56) Entgegenhaltungen:
- EP-A- 0 126 657
- CH-A- 546 873
- DE-B- 1 609 419
- DE-U- 8 912 144
- DE-U- 9 211 330
- FR-A- 1 264 529
- GB-A- 2 140 058
- GB-A- 2 208 265
- US-A- 2 909 353

## Beschreibung

Die Erfindung bezieht sich auf ein Verbindungs- bzw. Montagesystem, dessen zerlegbare Bestandteile auch aus dem Werkstoff Holz hergestellt werden können und das insbesondere zur Errichtung von Raumzellen und Montagemöbeln sowie zur komplexen Gestaltung von Innenausbauvorhaben (Shop in Shop-System) und Ausstellungen dient.

Zerlegbare Bauelemente zur Errichtung von Raumzellen und Montagemöbeln werden in der Regel aus Metallteilen gefertigt. Diese erfordern jedoch einen hohen Fertigungsaufwand. Sie sind oft sehr schwer und ohne oder nur von untergeordneter dekorativer Wirkung, wobei konstruktive Details oft in unerwünschter Weise sichtbar sind.

Aus DE 39 33 845 A1 ist ein Fachwerkknoten zur lösbaren Verbindung eines an einer Stirnseite eine Vertiefung aufweisenden Stützenteiles bekannt mit mindestens einem Pfettenteil über einen Stützenkopf. Der Stützenkopf weist ein Körperelement mit einer Form auf, die mindestens teilweise der Form der Vertiefung des Stützenteils entspricht. Das daran anschließende Flanschteil trägt eine oder mehrere in entgegengesetzter Richtung des Körperelementes abstehende Verbindungseinrichtungen, die mit einer aus der Stirnseite des Pfettenteiles herausragenden Pfettenlasche in Eingriff gebracht werden kann.
Mit dieser Lösung verbindet sich ein aufwendiger konstruktiver Aufbau bei hohem Montage- bzw. Demontageaufwand.

In DE-U-92 11 330.3 wurde bereits ein flexibles Holzbauelement beschrieben, das zur Errichtung von Raumzellen und Montagemöbeln vorgesehen ist. Dieses Holzbauelement besteht aus Verbindungsknoten mit bis zu 8 Zargenanschlüssen, Stützen, Verbindungsschrauben, Abdeckklappen und Fußelementen.
Bei der Montage werden die Zargen bzw. Horizontalbinder mittels einseitiger Dübel lediglich im Verbindungsknoten eingehängt.
Entscheidender Nachteil dieser Lösung ist die Gefahr des Abscherens der Zarge am Auflagepunkt. Durch die einseitige Lagerung der Zarge ist die Verbindung nicht winkelstabil; auch die Gesamtstabilität ist trotz hohen Materialeinsatzes nicht befriedigend.-

EP-A-0126657 wird ein Verbindungsknoten beschrieben. dessen kennzeichnende Merkmale insbesondere durch die metallische Ausführung der Montageteile geprägt wird.

Der Verbinder ist rohrförmig ausgeführt, er weist eine horizontale Teilung auf und in die Rohrwandungen sind von der Teilungsebene aus Schlitze eingefräst.

In diese Schlitze werden die Zargen eingehängt, die sich über eine schwalbenschwanzartige Ausformung an der inneren Wandung des Rohrverbinders abstützen.

Zum Verspannen des Verbindungsknotens verläuft axial durch die beiden Rohrstücke des Verbinders eine Durchgangsschraube, die mit einer gesonderten Spannvorrichtung zusammenwirkt.

Ausgehend von diesem Stand der Technik ist es Aufgabe der Erfindung, die oben genannten Nachteile zu beseitigen und die Funktionalität und damit den Anwendungsbereich solcher Verbindungs- bzw. Montagesysteme zu erweitern.
Weiterhin soll ein Verbindungssystem geschaffen werden, das auch bei einer Ausführung der zerlegbaren Bauelemente aus dem Werkstoff Holz trotz minimaler Dimensionierung der Systembestandteile den Nachteil der geringen Festigkeit des Holzes ausgleicht.

Diese Aufgabe wird erfindungsgemäß durch die Merkmale des Ansprüchen 1 gelöst, die Unteransprüche zeigen weitere vorteilhafte Ausgestaltungen der Erfindung.

Die stabile Verbindung der Skelettkonstruktion des Verbindungssystems wird erreicht durch den Preßdruck der Stützen auf die im Verbinder verankerten Zargen mittels Verbindungsschraube.

Des weiteren sorgen die beispielsweise durch Nut und Feder zwischen den Zargen befestigten Flächenelemente, s. Anspruch 2,oder die zwischen zwei Funktionsstützen nach Anspruch 8 eingehängten beidseitig gelagerten Konsolen für die nötige Winkelfestigkeit.

Mit der Erfindung wurde ein Konstruktionsprinzip geschaffen, welches auch bei einer Ausführung in Holz und adäquater Festigkeitswerte erweiterte Einsatzmöglichkeiten bietet. Die Montage und Demontage ist äußerst einfach und schnell vorzunehmen, wobei die Haltbarkeit bei einer Ausführung in Holz etwa der metallischer Elemente entspricht.

Das erfindungsgemäße Verbindungssystem ist im horizontalen Montagebereich unbegrenzt erweiterungsfähig und kann vertikal bis zu seiner statischen Belastbarkeit aufgestockt werden. An einen Verbinder können bis zu 8 Zargen in einer Ebene angeschlossen werden. Dies gestattet den Aufbau von Montageelementen bis zu Achteckkonstruktionen.

Aus den genormten Teilen der Erfindung lassen sich außer den raumbildenden Wandelementkonstruktionen auch Empfangstheken. Tische, Podeste, Schränke, Regale, Vitrinen, Sitzbänke usw. montieren.

Der Anspruch 2 ermöglicht eine Erweiterung des Verbindungssystems mit funktionell bedingten und ästhetisch wirkungsvollen Flächenelementen.

Die Funktionalität des Verbindungssystems kann weiterhin durch den nachfolgend beschriebenen Aufbau von in bestimmten Abschnitten der Skelettkonstruktion eingesetzten Funktionsstützen gemäß Anspruch 4 erhöht werden.

Diese Funktionsstützen können einmal so gestaltet werden, daß sie zwischen den in den Stirnenden der Funktionsstützen eingebrachten Gewindebuchsen (zur Verschraubung mit den Verbindern) einen die kompakt ausgeführte Stütze durchgehend oder abschnittsweise teilenden Längsschlitz aufweisen.
Im Bereich des Längsschlitzes bzw. der Längsteilung der Funktionsstütze sind im Rasterabstand senkrecht zur Längsachse der Stütze beispielsweise stiftartige Koppelelemente eingebracht, die die beiden Stützenhälften miteinander verbinden.

Zum anderen können diese Funktionsstützen längsgeteilt in zwei Hälften beliebigen Querschnitts ausgeführt sein, die voneinander beabstandet durch die stiftartigen Koppelelemente verbunden sind. Die Gewindebuchsen zur Montage mit den Verbindern sind wiederum in den stirnseitigen Endstücken eingebracht. In den Längsschlitz der Funktionsstütze können höhenverstellbar eine oder mehrere Konsolen oder andere Halterungen eingeschoben und nachfolgend unter Nutzung der Koppelelemente eingehängt und arretiert werden.

Daraus folgt, daß die Breite des Längsschlitzes bzw. der Abstand zwischen den beiden Hälften der Funktionsstütze sich aus der Dicke der Konsolen bzw. Halterungen, die diese im Einschubbereich haben, ergibt.

Die Konsolen können einseitig oder beidseitig in Funktionsstützen eingehängt werden; sie dienen u.a. zur Aufnahme von Böden, Stangen und Schrankelementen.

Zur Arretierung der jeweiligen in den Längsschlitz eingeschobenen Konsole dienen Kerben, die im Endbereich der Konsolen eingearbeitet sind. Bei der einseitigen Konsole sind auf der Montageseite zwei Kerben für eine vorgegebene Winkelstellung der Konsole und drei Kerben für eine zwischen zwei Winkelstellungen wählbare Position der Konsole vorhanden.

Bei der beidseitig gelagerten Konsole genügt jeweils eine in den beiden End- bzw. Einschubbereichen der Konsole eingebrachte Kerbe.
Auf die freie Länge (außerhalb der beiden Einschubbereiche in die Längsschlitze der Funktionsstützen) dieser beidseitig gelagerten Konsolen können zusätzlich Reiterelemente zum Höhenausgleich und zur Gewährleistung bestimmter Funktionen aufgeschoben werden.

Anstelle von Konsolen können als punktförmige Befestigungselemente, entlang der Länge der Funktionsstützen auch Ringhalterungen eingesetzt werden.
Diese Ringhalterungen gleiten auf der Funktionsstütze und sind damit höhenverstellbar.
Ihre Arretierung in der gewünschten Höhe der Funktionsstütze erfolgt mittels eines die Ringhalterung und den Längsschlitz der Funktionsstütze quer durchlaufenden Riegels, der im eingeschobenen Zustand analog der beschriebenen Konsolen über eine Einkerbung auf der Riegelunterseite in das jeweilige Koppelelement einrastet.

Im Einbauzustand verläuft der Riegel durch den Längsschlitz der Funktionsstütze hindurch und greift auf der dem Riegelgriff gegenüberliegenden Seite wieder in die Wandung der Riegelhalterung ein.
In der Ringhalterung befinden sich Aufnahmeöffnungen, in die beispielsweise (Kleider)Stangen eingesteckt werden können.

Weitere Einzelheiten, Merkmale und Vorteile der Erindung ergeben sich aus der nachfolgenden Beschreibung von Ausführungsbeispielen unter Bezugnahme auf die zugehörige Zeichnung; es zeigen
- Fig. 1: die Darstellung des Konstruktionsprinzips des aus Verbinder, Zargen und Stützen bestehenden Verbindungssystems anhand der zur Montage vorbereiteten Bauelemente,
- Fig. 2: die Gesamtansicht einer montierten Verbindung gemäß Fig. 1,
- Fig. 3: die Darstellung eines Verbinders mit Zarge in Vorderansicht in Draufsicht
- Fig. 4: die Innenseiten des horizontal geteilten Verbinders mit 8 strahlenförmigen Abgängen zur Aufnahme der Zargen,
- Fig. 5: ein montiertes Teilstück der Skelettkonstruktion des erfindungsgemäßen Verbindungssystems,
- Fig. 6: die Darstellung der Funktionsstütze und der einseitigen Konsole mit Detailansichten zur Verbindung der beiden Bauelemente,
- Fig. 7: die Darstellung einer Montageeinheit, bestehend aus zwei Funktionsstützen und beidseitig gelagerten Konsolen,
- Fig. 8: eine Detaildarstellung zur Montage der einseitig gelagerten Konsolen,
- Fig. 9: die Darstellung einer auf der Funktionsstütze aufsitzenden und sie dabei umschließenden Ringhalterung und
- Fig.10: die Ringhalterung nach Fig. 9 in einer um 90° gedrehten Ansicht.

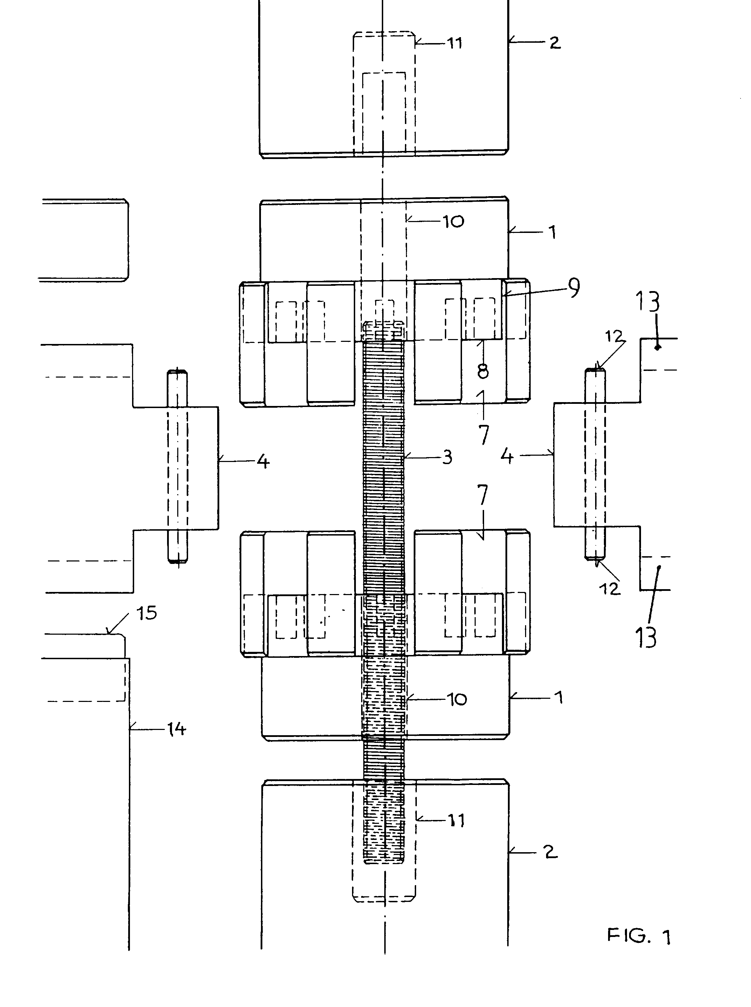

Beim gewählten Ausführungsbeispiel nach Fig. 1 bis 5 bestehen alle Teile des Verbindungssystems, ausgenommen die Verbindungsschraube 3 und die Gewindebuchse 11, aus dem Werkstoff Holz, wobei natürlich auch andere geeignete Materialien eingesetzt werden können.

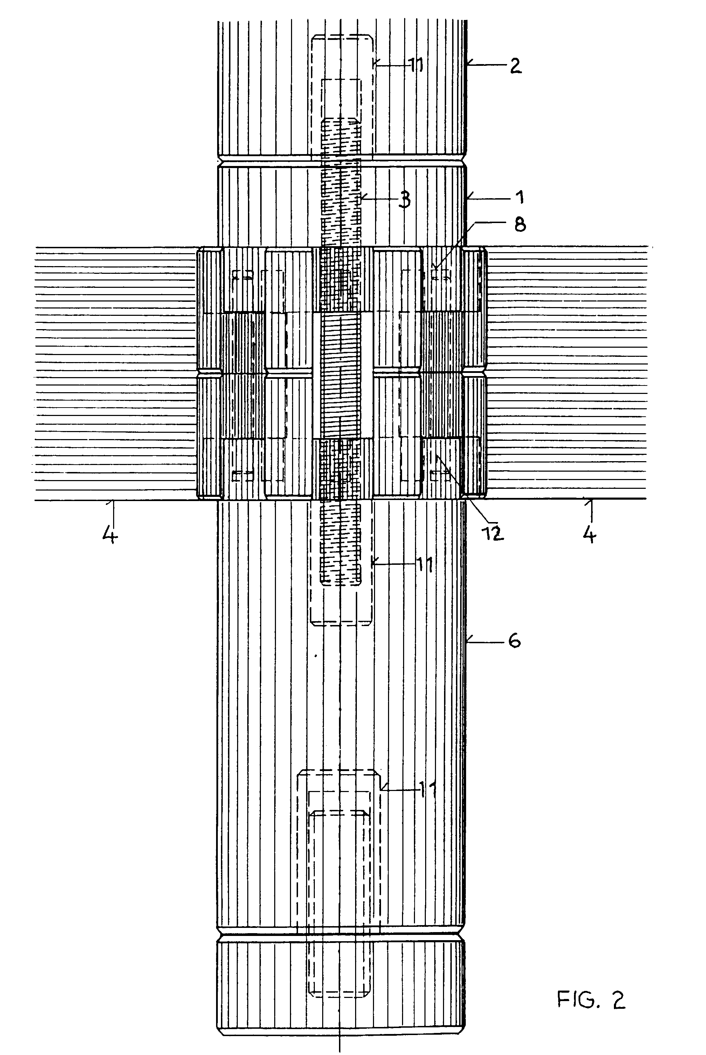

In den Figuren 1 und 2 ist das Konstruktionsprinzip des Verbindungssystems im Bereich eines Verbindungsknotens dargestellt.
Das Basiselement ist ein höhenverstellbares Fußelement 6 mit integrierter unterer Hälfte des Verbinders 1. In diese Hälfte wird die Zarge 4 mittels Dübel 12 (als Arretierungselement) in die Ausklinkung 7 und Bohrung 8 eingehängt. Die Verbindungschraube 3 wird in die Gewindebuchse 11 des Fußelementes 6 eingedreht und die obere Hälfte des Verbinders 1 durch die Bohrung 10 aufgesteckt. Die Stütze 2 wird mittels eingelassener Gewindebuchse 11 auf die Verbindungsschraube 3 aufgedreht. Die Längsnuten 9 verhindern ein seitliches Verkanten der Zargen 4, und die nun im Verbinder 1 verankerten Zargen 4 werden durch die Verbindungsschraube 3 winkelstabil zwischen Fußelement 6 und Stütze 2 eingepreßt.

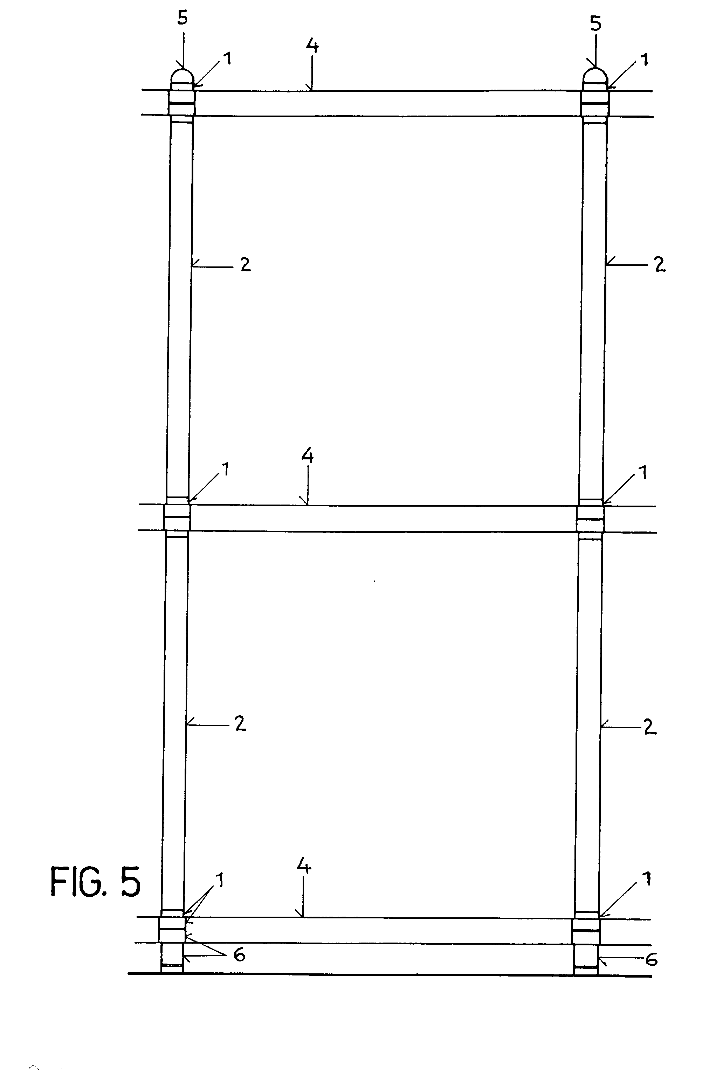

Daraufhin wiederholt sich der Montagerhythmus mit Eindrehen der Verbindungsschraube 3 in die Gewindebuchse 11 der Stütze 2 und Aufstecken der unteren Hälfte des Verbinders 1. Nach Einsetzen des Flächenelementes 14 mittels Feder 15 in die Nut 13 der unteren Zarge 4 wird die obere Zarge 4 in die untere Hälfte des Verbinders 1 und auf die Feder 15 der Fläche 14 aufgesteckt, die obere Hälfte des Verbinders 1 aufgesetzt und wieder kraftschlüssig verschraubt. Das Abschlußelement 5 (Fig. 5) schließt die Konstruktion nach oben ab.

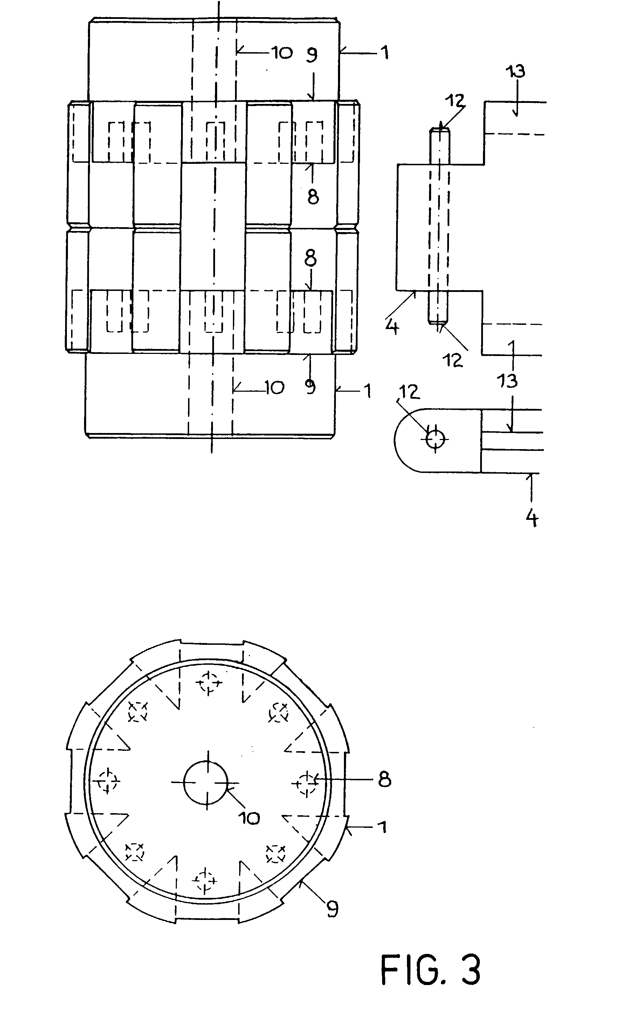

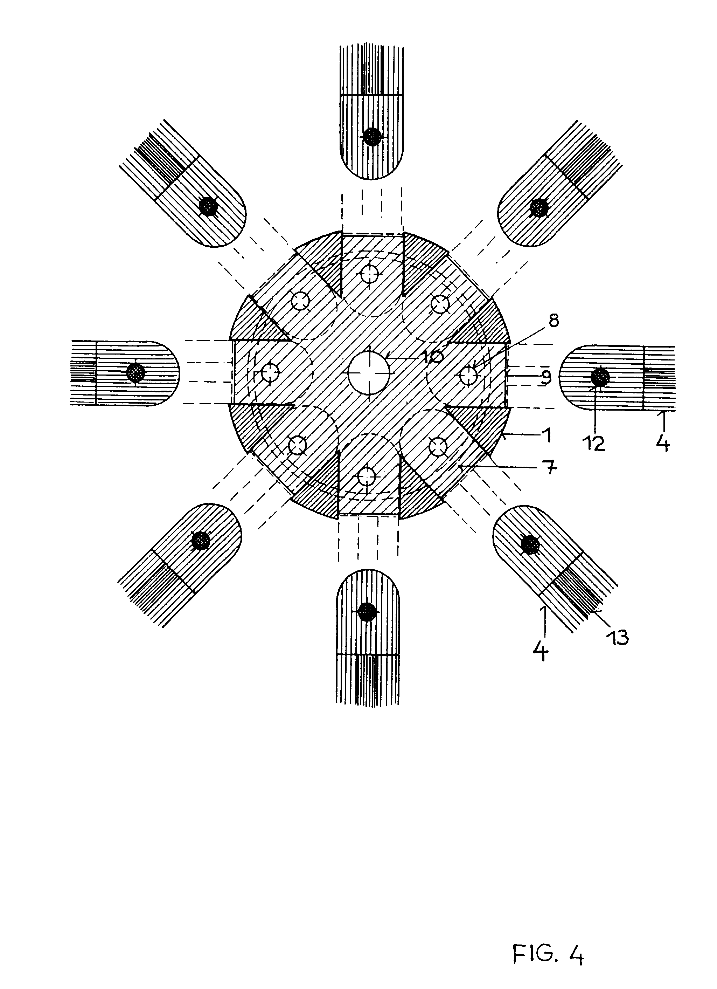

Die Figuren 3 und 4 zeigen die Erfindung mit ihren Einzelteilen in dimensionierungsgerechten Proportionen; in Fig.5 ist ein montiertes Teilstück der Skelettkonstruktion dargestellt.
Für dieses Ausführungsbeispiel betragen:
- der Durchmesser von Verbinder 1 und Stütze 2 ca. 60 mm; der Durchmesser des Verbinders 1 im Verbindungsbereich 70 mm,
- die Längenausdehnung des Verbinders 1 im montierten Zustand 100 mm,
- der Querschnitt der Zargen 4 ca. 30 × 15 bzw. 60 × 15 mm,
- der Durchmesser der durchgehenden vertikalen Bohrung 10 11 mm und der Bohrung 8 etwa 4 mm.

Der Verbinder 1 wird als Standardelement grundsätzlich mit 8 Zargenabgängen gefertigt. Bei Sonderkonstruktionen wird der Verbinder nur mit den tatsächlich benötigten Abgängen hergestellt.
Die Verbindungsschraube 3 sollte aus Kunststoff oder Metall, die Gewindebuchse 11 aus Kunststoff bestehen. Die Systemteile der Holzskelettkonstruktion bleiben in der Regel in Naturholz, in Sonderfällen ist Beizung in RAL-Tönen möglich.

Die Flächenelemente 14 sind je nach Einsatzart aus Kunststoff, Metall, Glas oder Holz gefertigt. Rahmenkonstruktionen sind möglich.

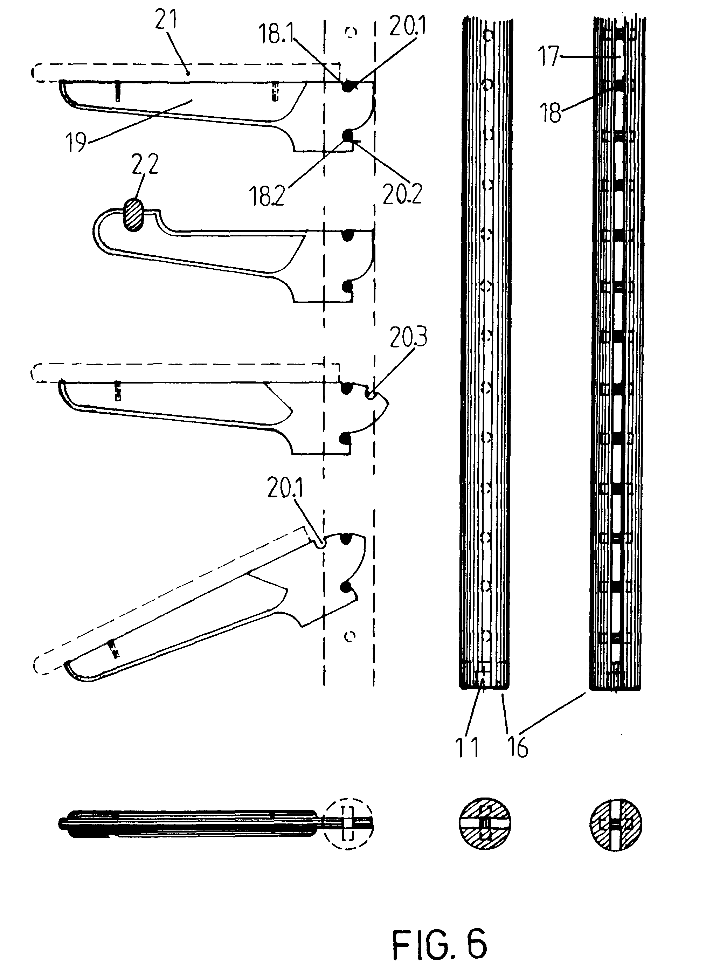

Die für das Ausführungsbeispiel gemäß Fig. 6 bis 8 gewählten Funktionsstützen 16 und Konsolen 19, 23 sind aus Holz gefertigt; die Funktionsstützen 16 haben einen kreisrunden Querschnitt.
Selbstverständlich sind auch andere Werkstoffe bzw. Querschnitte möglich.

Die Funktionsstützen 16 nach Fig. 6 haben eine Säulenform mit einem Längsschlitz 17, der sich über die gesamte Länge der Funktionsstützen zwischen den an den beiden Stirnenden eingebrachten Gewindebuchsen 11 erstreckt.
über die Gewindebuchsen 11 erfolgt eine Verbindung (Montage) mit den nicht gezeigten Knotenelementen/Verbindern 1 aus Fig. 1 bis Fig. 5.

Als stiftartige Koppelelemente 18 werden im Rasterabstand von beispielsweise 60 mm Dübel eingesetzt.
Diese Dübel 18 verlaufen bei vertikaler Stellung der Funktionsstützen 16 in horizontaler Lage senkrecht zur Schnittebene der Stützenhälften und verbinden auf diese Weise die beiden Hälften der Funktionsstützen 16 in einem definierten Abstand.

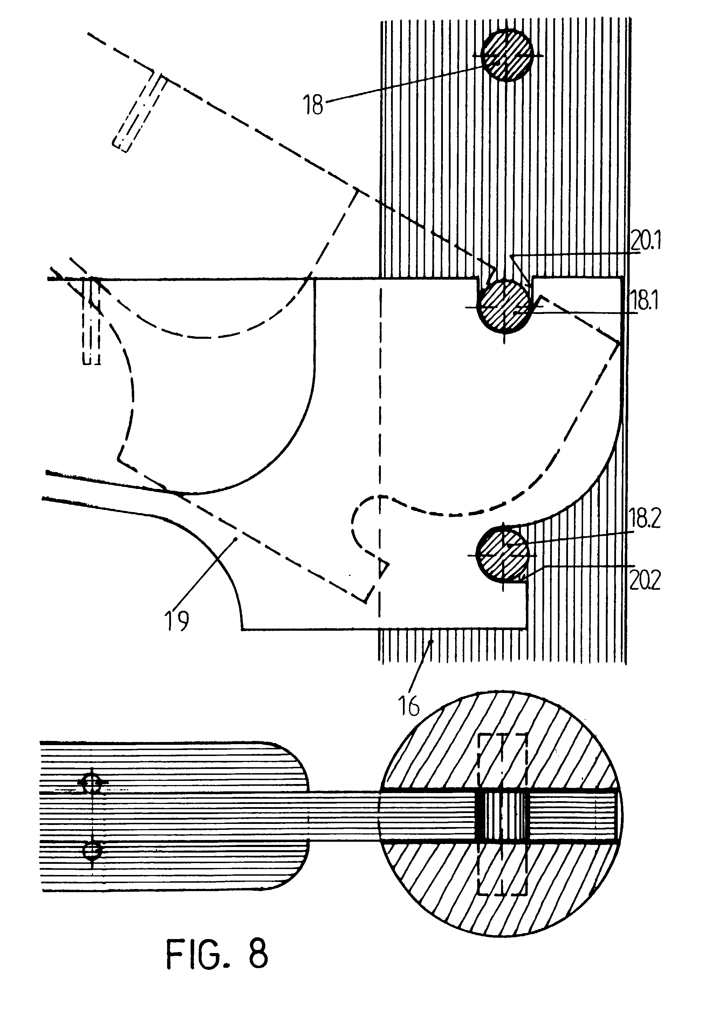

Die Breite des Längsschlitzes 17 ist abhängig von der Dicke der Konsolen 19 und 23 und beträgt beispielsweise bei einem Stützendurchmesser von 60 mm und einer Konsolendicke von 12 mm ca. 13 mm.
Die einseitig gelagerte Konsole 19 hat in einer ersten Ausführungsform, s. auch Fig. 8, auf der Montageseite zwei Kerben 20.1 und 20.2, die in Verbindung mit der aus Fig. 6 und Fig. 8 ersichtlichen Formgebung der Montageseite der Konsole ein leichtes Befestigen zwischen zwei benachbarten Dübeln 18 im Längsschlitz 17 der Funktionsstütze 16 gewährleistet.
Das Einhängen der Konsole 19 in die Funktionsstütze 16 erfolgt in der Weise, daß die Konsole in nach oben angewinkelter Position in den Längsschlitz 17 eingeschoben wird bis der obere Dübel 18.1 in die Kerbe 20.1 einrastet und nach Drehbewegung (Herabschwenken) der Konsole 19 mit der Kerbe 20.2 auf dem unteren Dübel 18.2 aufsitzt.

Die der Montageseite der Konsole 19 abgewandte Funktionsseite dient zur Aufnahme von Auflageelementen, wie Einlegeboden 21, Kleiderstange 22 und Schrankelementen.

Bei einer zweiten Ausführungsform in Fig. 6 ist die Konsole 19 auf der Montageseite mit 3 Einkerbungen 20.1, 20.2 und 20.3 so ausgeführt, daß die Konsole in zwei unterschiedlichen Winkelstellungen positioniert werden kann, beispielsweise einmal im 90°-Winkel zur Funktionsstütze 16 und zum anderen mit 30°-Winkel zur Horizontalen.

Der Durchmesser der Dübel 18 beträgt für das gewählte Ausführungsbeispiel 12 mm, der Kreisdurchmesser der Kerben 20 ca. 13 mm.

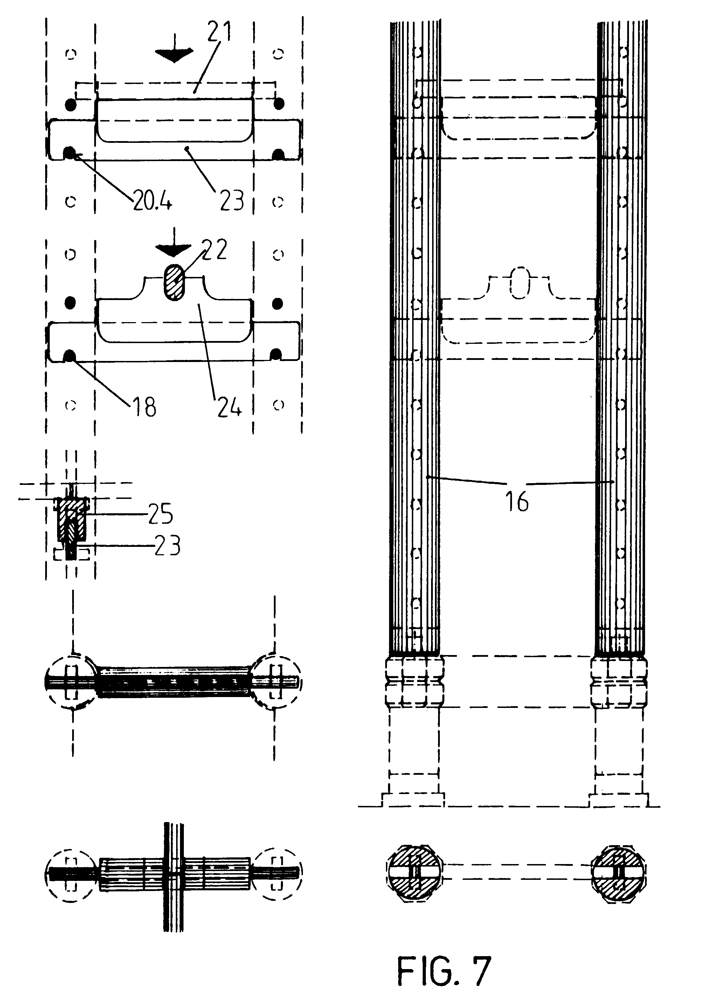

Fig. 7 veranschaulicht die unter Einbeziehung von zwei Funktionsstützen 16 beidseitig gelagerte Konsole 23. Bei dieser Konsole sind beide Endbereiche Montageseiten und in jedem Endbereich befindet sich auf der Unterseite der Konsole 23 eine Kerbe 20.4 .

Die Montage dieser Konsole 23 erfolgt durch Einschieben jeweils durch bzw. in den Längsschlitz 17 der beiden Funktionsstützen 16 und Verändern der Distanz der einbezogenen Funktionsstützen solange, bis die Kerben 20.4 in die betreffenden Dübel 18 einrasten.

Auf die freie Länge der Konsole 23 können Reiterelemente 24 aufgebracht werden, die sowohl den Höhenausgleich zu den einseitigen Konsolen 19 gewährleisten als auch bestimmte Funktionen übernehmen. Solche Funktionen sind inbesondere die Erhöhung der Stabilität der Konsole 23 sowie die Kopplung mit Auflageelementen, wie Einlegeboden 21 und Kleiderstange 22.

Die Verbindung der Reiterelemente 24 mit der Konsole 23 erfolgt beispielsweise durch Einbringen einer Nut 25 in die Unterseite der Reiterelemente.
Mittels dieser Nut 25 wird das Reiterelement 24 auf die Oberseite der Konsole 23 aufgeschoben.

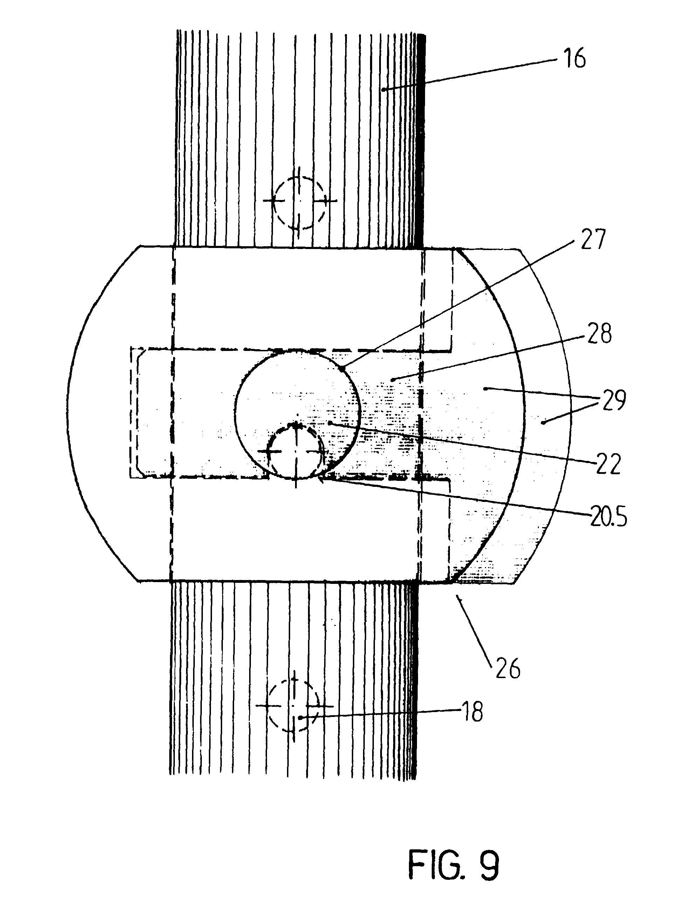

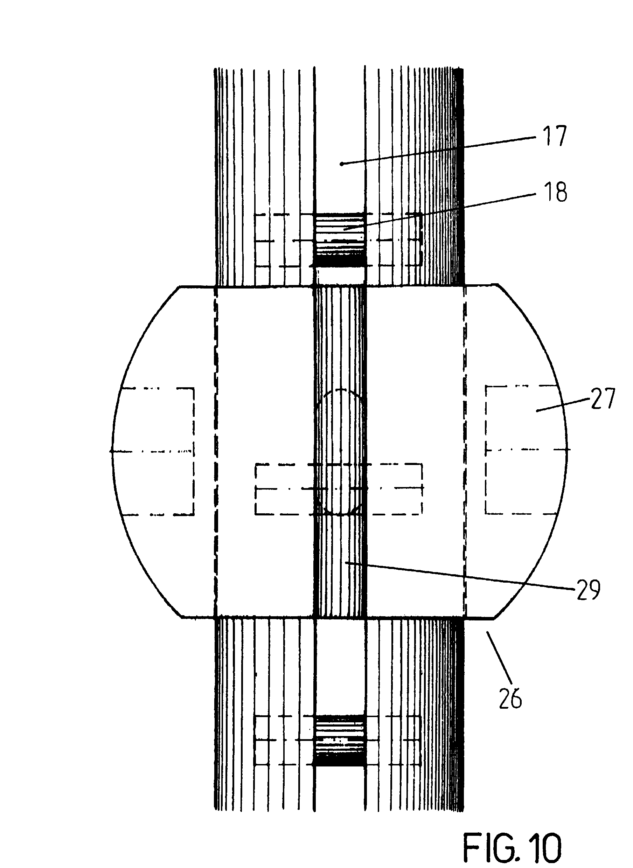

Die Fig. 9 und 10 zeigen die auf der Funktionsstütze 16 als punktförmiges Befestigungselement aufsitzende, höhenverstellbare Ringhalterung 26.
Durch Herausziehen des Riegels 28 am Riegelgriff 29 ist die Ringhalterung, geführt von der eingeschlossenen Funktionsstütze 16, gleitfähig und kann in die gewünschte Position an der Funktionsstütze auf und ab bewegt werden. Zur Arretierung der Ringhalterung 26 wird der Riegel 28 soweit radial in die Ringhalterung hineingeschoben, bis die Einkerbung 20.5 auf der Riegelunterseite in den in der jeweiligen Höhe vorhandenen Dübel 18 einrastet. In dieser Einbauposition läuft der Riegel 28 quer durch den Längsschlitz 17 der Funktionsstütze 16 und greift auf der dem Riegelgriff 29 gegenüberliegenden Seite wieder in die Laibung der Ringhalterung 26 ein.

In der Wandung der Ringhalterung 26 sind Aufnahmeöffnungen 27 eingebracht, in die beispielsweise Kleiderstangen 22 oder beliebeige Haltestangen eingesteckt werden können.

In Fig. 9 und 10 sind es zwei Aufnahmeöffnungen 27, die um 90° versetzt zur Riegelebene in der Ringhalterung vorgesehen sind.

## Patentansprüche

1. Verbindungssystem, insbesondere zur Errichtung von Raumzellen und Montagemöbeln sowie zur komplexen Gestaltung für Innenausbau und Ausstellungen, bestehend aus Verbindern (1) mit einer horizontalen Teilung für 1 bis 8 Zargenanschlüsse, Stutzen (2), jeweils eine durch die Längsachse des zweigeteilten Verbinders verlaufende Verbindungsschraube (3), Zargen (4). Abschlußelementen (5) und höhenverstellbaren Fußelementen (6).
**dadurch gekennzeichnet**, daß
a) in den gegenüberliegenden Innenseiten der aus Vollmaterial bestehenden Verbinderhälften jeweils bis zu 8 Ausklinkungen (7) mit Bohrungen (8) und Längsnuten (9) zur Aufnahme und Justierung der Zargen (4) eingebracht sind. wobei die in die Verbinderhälften eingeführten Stirnenden der Zargen (4) eine symmetrische Abstufung aufweisen, deren Formgebung den Auslinkungen (7) und Längsnuten (9) angepaßt ist und das abgestufte Stirnende eine jeden Zarge (4) ein beidseitig überstehendes Arretierungselement (12) aufnimmt, das in die zugehörigen Bohrungen (8) eingreift und
b) die Verbindungsschraube (3) in die eingelassenen Gewindebuchsen (11) an den Enden der Stützen (2). Funktionsstutzen (16), Abschlußelemente (5) und höhenverstellbaren Fußelemente (6) eingedreht wird und dabei die Zargen (4) mit den Arretierungselementen (12) im Verbinder (1) positioniert und verspannt und
c) zumindest ein Teil der Stützen (2) als Funktionsstützen (16) in der Weise ausgebildet sind, daß zwischen den in den Stirnenden der Funktionsstutzen (16) eingebrachten Gewindeburchsen (11) die Funktionstutze (16) einen sie durchgehend oder abschnittsweise teilenden Längsschlitz (17) aufweist.
und im Bereich des Längsschlitzes (17) im Rasterabstand senkrecht zur Längsachse der Funktionsstutze (16) Koppelelemente (18) eingebracht sind, die die entlang der Längsachse geschlitzten Abschnitte der Funktionsstütze (16) miteinander verbinden, wobei die Breite des Längsschlitzes (17) von der Dicke der einseitig oder beidseitig einhängbaren Konsolen (19) und (23) bestimmt wird, die höhenverstellbar in den Längsschlitz (17) einzuschieben und unter Nutzung der Koppelelemente (18) einzuhängen und/oder einzurasten sind.

2. Verbindungssystem nach Anspruch 1.
**dadurch gekennzeichnet**, daß die Zargen (4) Nuten (13) an ihrer Ober- und Unterkante zur Aufnahme von Flächenelementen (14) mittels eingelassener Feder (15) besitzen.

3. Verbindungssystem nach Anspruch 1 oder 2.
**dadurch gekennzeichnet**, daß die Längen der Zargen (4) und Stützen (2.16) untereinander derart bemessen sind, daß die Längen der größeren Zargen und Stützen jeweils ein vielfaches Ganzes der Längen der kleineren Zargen und Stutzen betragen.

4. Verbindungssystem nach Anspruch 1,
**dadurch gekennzeichnet,** daß die Funktionsstütze (16) längsgeteilt, aus zwei Halten bestehend, aufgebaut ist. wobei die Halften durch den Längschlitz (17) voneinander beabstandet durch Koppelelemente (18) miteinander verbunden sind und an den stirnseitigen Endstucken der Funktionsstutze (16) je eine Gewindebuchse (11) zur Montage mit den Verbindern (1) eingebracht ist und die Breite des Längsschlitzes (17) sich aus der Dicke der einseitig oder beidseitig einhängbaren Konsolen (19) und (23) ergibt, die in den längsschlitz (17) einzuschieben und unter Nutzung der Koppelelemente (18) zu arretieren sind.

5. Verbindungssystem nach Anspruch 1 oder 4,
**dadurch gekennzeichnet**, daß die Koppelelemente (18) in den Funktionsstutzen (16) stiftartig ausgeführt sind.

6. Verbindungssystem nach einem der Ansprüche 1, 4 und 5,
**dadurch gekennzeichnet**, daß eine einseitig einhängbare Konsole (19) auf der Montageseite zwei Kerben (20.1) und (20.2) besitzt, in die zwei benachbarte Koppelelemente (18) nach dem Einschieben der Konsole (19) in den Längsschlitz (17) der Funktionsstutze (16) eingreifen.

7. Verbindungssystem nach einem der Anspruche 1, 4 und 5.
**dadurch gekennzeichnet**, daß eine einseitig einhängbare Konsole (19) auf der Montageseite drei Kerben (20.1) . (20.2) und (20.3) aufweist, wobei das Eingreifen von zwei benachbarten Koppelelementen (18) in jeweils zwei Kerben (20.1) und (20.2) oder (20.2) und (20.3) eine unterschiedliche Winkelstellung der Konsole (19) gestattet.

8. Verbindungssystem nach Anspruch 1 oder 4,
**dadurch gekennzeichnet**, daß eine beidseitig gelagerte Konsole (23) jeweils eine Kerbe (20.4) in den beiden Endbereichen der Konsole (23) besitzt, in die nach dem Einschieben der Endbereiche der Konsole in den jeweils zugehörigen Langsschlitz (17) der beiden Funktionsstützen (16) ein Koppelelement (18) eingreift.

9. Verbindungssystem nach Anspruch 8.
**dadurch gekennzeichnet**, daß auf die freie Länge der Konsole (23) Reiterelemente (24) aufgebracht sind, die mit solchen Auflageelementen wie Einlegeboden (2) und Kleiderstange (22) verbunden sind.

10. Verbindungssystem nach Anspruch 9,
**dadurch gekennzeichnet**, daß zur Verbindung der Reiterelemente (24) mit der Konsole (23) in die Unterseite der Reiterelemente (24) eine Nut (25) eingearbeitet ist.

11. Verbindungssystem nach Anspruch 1 oder 4,
**dadurch gekennzeichnet**, daß Ringhalterungen (26) mit Aufnahmeoffnungen (27) für Stangen (22) u.a.m. als punktförmige Befestigungselemente auf der Funktionsstütze (16) gleitfähig aussitzen und für ihre Arretierung ein die Ringhalterung (26) und den Langsschlitz (17) der Funktionsstütze (16) quer durchlaufender Riegel (28) vorhanden ist, der auf der Unterseite eine Einkerhung (20.5) aufweist, in die im eingeschobenen Zustand ein Koppelelement (18) eingreift.

12. Verbindungssystem nach Anspruch 11.
**dadurch gekennzeichnet**, daß in der Einbaupositon der Riegel (28) auf der dem Riegelgriff (29) gegenüberliegenden Seite wieder in die Wandung der Ringhalterung (26) eingreift.

## Claims

1. Connection system, in particular for constructing accomodation units and assembled furniture as well as for complex configurations for interior design plans and exhibitions comprising connectors (1) being horizontally divided to accomodate 1 to 8 frame member resting ends, supports (2), a connection screw (3) arranged in the longitudinal axis ofthe split connector (1), frame members (4), connection elements (5), and vertically adjustable base elements (6) **wherein**
a) up to 8 notches (7) each are made in the opposite internal sides of the connector halves with bores (8) and longitudinal grooves (9) to accomodate and adjust the frame members (4) whereby the ends of the frame members (4) inserted into the connector halves have symmetric steps the shape of which is adapted to the notches (7) and the longitudinal grooves (9), and the stepped end of each frame member (4) accomodates a locking element (12) which projects on both sides and engages with the associated bores (8) and
b) the connection screw (3) is screwed in the threaded bushings (11) inserted at the ends of the supports (2), functional supports (16), connection elements (5), and vertically adjustable base elements (6), and thereby locates and clamps the frame members (4) to the locking elements (12) in the connector (1) and
c) at least some of the supports (2) are made to be functional supports (16) in such a way that a functional support (16) has, between the threaded bushings (11) inserted in the ends of the functional supports (16), a longitudinal slot (17) halving it over its full length or over sections, and, in the range of the longitudinal slot (17), couplers (18) are fitted vertically to the longitudinal axis of the functional support (16) at grid positions, which connect the longitudinally slotted sections of the functional support (16) each to the other whereby the width of the longitudinal slot (17) is chosen to suit to the thickness of the consoles (19) and (23), which can be suspended at one or both sides and can be vertically adjusted when being slided in the longitudinal slot (17) and using the couplers (18), are hung in and/or snapped into place.

2. Connection system of Claim 1,
**wherein** the frame members (4) have grooves (13) on their upper and lower edges to accomodate plate elements (14) by means of inserted tongues (15).

3. Connection system of Claim 1 or 2,
**wherein** the lengths of the frame members (4) and supports (2, 16) are chosen to relate each
other in such a way that the lengths of the greater frame members and supports are integer multiples of the lengths of the smaller frame members and supports.

4. Connection system of Claim 1,
**wherein** the functional support (16) is longitudinally divided and comprises two halves, with these halves spaced by the longitudinal slot (17) and connected each to the other by couplers (18) and, at the front ends of the functional support (16), one threaded bushing (11) each is inserted for the assembly with the connectors (1) and the width of the longitudinal slot (17) follows from the thickness ofthe consoles (19) and (23), which can be suspended at one or both sides and can be pushed in the longitudinal slot (17), and are locked using the couplers (18).

5. Connection system of Claim lor 4,
**wherein** the couplers (18) in the functional supports (16) are shaped as pins.

6. Connection system of any of Claims 1, 4 and 5,
**wherein** a one-sidedly suspendable console (19) has, on the assembly side, two indents (20.1) and (20.2), with which two adjacent couplers (18) engage after the console (19) having been pushed into the longitudinal slot (17) ofthe functional support (16).

7. Connection system of any of Claims 1, 4 or 5,
**wherein** a one-sidedly suspendable console (19) has, on the assembly side, three indents (20.1), (20.2) and (20.3) such that the engagement oftwo couplers (18) in two indents (20.1) and (20.2) or (20.2) and (20.3), respectively, allows different angular positions of the console (19).

8. Connection system of Claim 1 or 4,
**wherein** a two-sidedly suspendable console (23) has in both of its end zones, an insert (20.4), with which a coupler (18) engages after the end zones of the console having been pushed in the associated longitudinal slot (17) of both functional supports (16).

9. Connection system of Claim 8,
**wherein** the free length of the console (23) carries riding elements (24), which are connected to supporting elements like a shelve (21) or clothes-rail (22).

10. Connection system of Claim 9,
**wherein** a groove (25) is made in the lower side of the riding elements (24) in order to connect the riding elements (24) to the console (23).

11. Connection system of Claim 1 or 4,
**wherein** ring mounts (26) with seating holes (27) to seat rails (22) or the like sit on the functional support (16) to serve as sliding punctual supporting elements and, in order to lock them, a bolt (28) is provided, which transversely passes through the ring mount (26) and longitudinal slot (17) of the functional support (16) and has, at its lower side, an indent (20.5) with which a coupler (18) engages when it is pushed in place.

12. Connection system of Claim 11,
**wherein** the bolt (28), in assembled position, engages with the side of the ring mount (26) opposite to the bolt handle (29).

## Revendications

1. Système d'assemblage, en particulier pour ériger des cellules de locaux et des meubles à monter, ainsi que pour la réalisation complexe d'agencements d'intérieurs et d'expositions, comprenant des raccords (1) pourvus d'une division horizontale et possédant 1 à 8 raccordements de traverses, des montants (2), une vis de jonction (3) s'étendant suivant l'axe du raccord à travers chaque raccord divisé en deux parties, des traverses (4), des éléments terminaux (5) et des éléments de pieds (6) réglables en hauteur,
**caractérisé en ce que**
a) jusqu'à huit évidements (7) avec des trous (8) et des rainures longitudinales (9) pour la réception et l'ajustement des traverses (4) sont ménagés dans les côtés intérieurs qui se font face des moitiés de raccord, faites de matériau massif, les extrémités des traverses (4) engagées dans les moitiés de raccord présentant une réduction symétrique dont la conformation est adaptée aux évidements (7) et aux rainures longitudinales (9), et l'extrémité ainsi étagée de chaque traverse (4) recevant un élément d'arrêt (12) faisant saillie des deux côtés et pénétrant dans les trous (8) correspondants,
b) la vis de jonction (3) est vissée dans des douilles filetées (11) encastrées dans les extrémités des montants (2), montants fonctionnels (16), éléments terminaux (5) et/ou éléments de pieds (6) réglables en hauteur, ce qui produit le positionnement et le serrage des traverses (4) et de leurs éléments d'arrêt (12) dans le raccord (1), et
c) au moins une partie des montants (2) est réalisée sous la forme de montants fonctionnels (16) possédant, entre les douilles filetées (11) encastrées dans les extrémités des montants fonctionnels (16), une fente longitudinale (17) qui divise le montant de façon continue ou par endroits,
des éléments de couplage (18) ayant été mis en place avec un espacement régulier et perpendiculairement à l'axe du montant fonctionnel (16) dans la zone de sa fente longitudinale (17), éléments de couplage qui relient entre elles les parties du montant (16) séparées par la fente s'étendant suivant l'axe du montant, la largeur de la fente longitudinale (17) étant fixée par l'épaisseur des consoles (19; 23), pouvant être accrochées ou suspendues par un côté ou par les deux côtés dans un montant, consoles qui sont à insérer dans la fente longitudinale (17), avec la possibilité de les régler en hauteur, et à accrocher et/ou verrouiller avec utilisation des éléments de couplage (18).

2. Système d'assemblage selon la revendication 1, caractérisé en ce que les traverses (4) possèdent des rainures (13) dans leurs côtés supérieur et inférieur pour la réception d'éléments de surface (14) par une languette (15) introduite dans la rainure.

3. Système d'assemblage selon la revendication 1 ou 2, caractérisé en ce que les longueurs des traverses (4) et des montants (2, 16) sont choisies de manière que les longueurs des traverses et des montants plus grands représentent chaque fois un multiple entier des longueurs des traverses et des montants plus petits.

4. Système d'assemblage selon la revendication 1, caractérisé en ce que le montant fonctionnel (16) est divisé longitudinalement en deux moitiés qui sont espacées l'une de l'autre par l'interposition de la fente longitudinale (17) et reliées entre elles par des éléments de couplage (18), et une douille filetée (11) pour le montage sur les raccords (1) est placée dans chaque extrémité du montant fonctionnel (16), la largeur de la fente longitudinale (17) étant fixée par l'épaisseur des consoles (19; 23), pouvant être accrochées ou suspendues sur un côté ou sur deux côtés, consoles qui sont à introduire dans la fente longitudinale (17) et à immobiliser par l'utilisation des éléments de couplage (18).

5. Système d'assemblage selon la revendication 1 ou 4, caractérisé en ce que les éléments de couplage (18) dans les montants fonctionnels (16) sont réalisés à la façon de tiges.

6. Système d'assemblage selon une des revendications 1, 4 et 5, caractérisé en ce qu'une console (19) accrochable d'un côté possède, sur le côté de montage, deux encoches ou évidements semblables (20.1; 20.2), dans lesquels s'engagent, après l'insertion de la console (19) dans la fente longitudinale (17) du montant fonctionnel (16), deux éléments de couplage (18) voisins.

7. Système d'assemblage selon une des revendications 1, 4 et 5, caractérisé en ce qu'une console (19) accrochable d'un côté présente trois encoches ou évidements semblables (20.1; 20.2; 20.3) sur le côté de montage, permettant deux positions angulaires différentes de la console (19) par l'engagement de deux éléments de couplage (18) voisins dans chaque fois deux encoches (20.1 et 20.2 ou 20.2 et 20.3).

8. Système d'assemblage selon la revendication 1 ou 4, caractérisé en ce qu'une console (23) supportée des deux côtés, possède une encoche ou un évidement semblable (20.4) dans chacune de ses deux parties extrêmes, dans lequel s'engage un élément de couplage (18) après l'insertion des parties extrêmes de la console dans les fentes longitudinales (17) correspondantes des deux montants fonctionnels (16).

9. Système d'assemblage selon la revendication 8, caractérisé en ce qu'un cavalier (24) est placé sur la longueur libre de la console (23), cavalier qui peut être relié à des éléments, tels que des tablettes (21) et une tringle à vêtements (22), pour poser ou accrocher des objets.

10. Système d'assemblage selon la revendication 9, caractérisé en ce qu'une rainure (25) est ménagée dans le côté inférieur des cavaliers (24) pour la disposition des cavaliers sur les consoles (23).

11. Système d'assemblage selon la revendication 1 ou 4, caractérisé en ce que des supports annulaires (26), présentant des ouvertures de réception ou logements (27) pour des barres (22) et analogues, sont disposés coulissants en tant qu'éléments de fixation ponctuelle sur le montant fonctionnel (16), avec prévision, pour l'immobilisation et le verrouillage de ces supports, d'un verrou (28) qui s'étend transversalement à travers le support annulaire (26) et la fente longitudinale (17) du montant fonctionnel (16), verrou dont le côté inférieur présente une encoche ou un évidement semblable (20.5) dans lequel s'engage un élément de couplage (18) à l'état enfoncé du verrou.

12. Système d'assemblage selon la revendication 11, caractérisé en ce que, à la position montée, le verrou (28) pénètre de nouveau dans la paroi du support annulaire (26) par son côté opposé à celui portant une poignée (29) pour l'enfoncement du verrou.
